# EUROPEAN PATENT APPLICATION

(11) **EP 1 707 805 A2**
(43) Date of publication of application: **04.10.2006**
(21) Application number: 06251561.4
(22) Date of filing: 23.03.2006
(51) Int. Cl.: F03D 1/00

(54) **Wind blade construction and system and method thereof**

(30) Priority: 31.03.2005 US 94952
(71) Applicant: GENERAL ELECTRIC COMPANY, Schenectady, NY 12345 (US)
(72) Inventor: Lin, Wendy Wen-Ling, Niskayuna New York 12309 (US); Finn, Scott Roger, Niskayuna New York 12309 (US); Kootstra, Dirk-Jan, 6641 XR Beuningen, GLD (NL)
(74) Representative: Pedder, James Cuthbert

(57) **Abstract**

A method for constructing a wind turbine blade (16) for installation at a wind farm location (10) is described herein. In accordance with the present method, primary components of the wind turbine blade (16), for example, the root and the spar caps, are manufactured in a first manufacturing facility (22). Secondary components such as, for example, the skin, are manufactured at a second manufacturing facility (24), which is closer to the wind farm location (10) than the first manufacturing facility (22). The manufactured primary and secondary components may be assembled in an assembly location near the wind farm (10).

## Description

The present invention relates generally to wind turbines and particularly to wind turbine blades. Specific embodiments of the present invention provide systems and methods for constructing a multi-piece large wind turbine blade for optimized quality and transportation, for example.

Wind turbines are generally regarded as an environmentally safe and desirable source of energy. In summary, wind turbines harness the kinetic energy of wind and transform this kinetic energy into electrical energy. Thus, electrical power can be generated in an almost pollution free manner. Often, to maximize the efficacy of power generation and to simplify connection to a power grid, wind turbines are located in proximity to one another in what are generally referred to in the pertinent art as "wind farms." Advantageously, these wind farms are located in regions having relatively strong winds, such as offshore locations and flat plains, for instance.

To generate electrical power, wind turbines generally include a rotor that supports a number of blades extending radially therefrom. These blades capture the kinetic energy of the wind and, in turn, cause rotational motion of a drive shaft and a rotor of a generator. The electromagnetic relationships between the rotor and the remaining components of the generator facilitate the translation of the kinetic energy of the rotor into electrical energy. In summary, rotation of the rotor induces electrical current in the generator, generating electrical power.

The amount of energy produced by such wind power generation systems is dependent on the ability of the wind turbine to capture wind. As one example, the greater the efficacy of the wind turbine blades the greater the electrical power generated by a given turbine. In designing blades for a wind turbine, it has been found that increasing the length of the turbine blades can increase the power output of the wind turbine.

However, blade designs is presently limited by infrastructure concerns. For example, the maximum length of blades for land-based wind farms is often limited by the size of transportation arteries, such as roads and bridges, because of the difficulty, if not inability, in transporting blades from the production facility to the wind farm. As a particular example, the maximum chord width allowed for transportation of blades through tunnels and under bridges may be limited by the design of such structures. Hence, it may be necessary to reduce the max chord from an optimal length, to meet these transportation and infrastructure requirements.

Furthermore, it is generally desirable to maintain good quality control standards over wind turbine design, particularly when blade lengths are increased. Unfortunately, traditional techniques of fabricating entire wind blades at a single facility may require certain components of the blades to be manufactured at locations local to the wind farm for blade designs that exceed the transportation limits. However, it is typically more difficult for a manufacturer to invest in the infrastructure (e.g. non-destructive inspection equipment, automated manufacturing equipment, etc.) necessary for optimal quality control at such on-site production facilities where only a limited number of blades will be produced.

Accordingly, there exists a need for manufacturing methods and systems to improve quality fabrications as well as transportation requirements of large wind turbine blades.

The present invention accordingly provides a novel approach toward manufacturing a wind turbine blade that obviates the problems discussed above. Briefly, in accordance with one aspect of the present invention, a method of manufacturing a wind turbine blade for installation at a wind farm location includes manufacturing at least one structural component of the wind turbine blade at a first manufacturing facility and manufacturing a skin component of the wind turbine blade at a second manufacturing facility, wherein the second manufacturing facility is closer to the wind farm location than the first manufacturing facility. The method may further include providing the structural and skin components to an assembly location near the wind farm location.

The invention will now be described in greater detail, by way of example, with reference to the drawings, in which:-
FIG. 1 diagrammatically illustrates a geographic relationship of manufacturing facilities with respect to a wind farm, in accordance with one exemplary embodiment of the present technique;
FIG. 2 illustrates a wind turbine assembly, in accordance with an exemplary embodiment of the present invention;
FIG. 3 is a perspective view of a wind turbine blade assembly, in accordance with an exemplary embodiment of the present technique;
FIG. 4 is a cross-sectional view of a wind turbine blade of the wind turbine of FIG. 3 along line 4-4; and
FIG. 5 is a flowchart representative of a method of manufacturing a wind turbine blade, in accordance with an exemplary embodiment of the present technique.

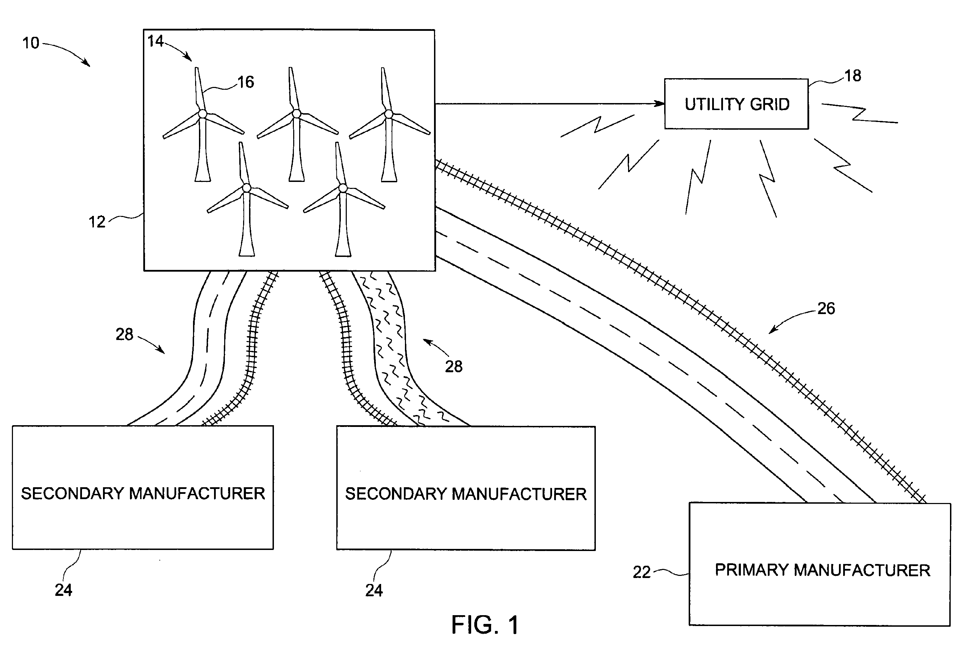

The present technique provides a method for constructing a multi-piece wind turbine blade for optimized quality and transportation. The technique involves fabrication of primary structural components of the wind turbine blade at quality suppliers and shipping smaller blade components rather than full blades over long distances for best balance of quality parts and optimal design. Certain embodiments of the present technique are discussed hereinafter with reference to FIGS. 1-6.

FIG. 1 illustrates geographic relationships 10 of various manufacturing facilities of wind blade components with respect to a wind farm 12, in accordance with an exemplary embodiment of the present technique. The wind farm 12 includes a plurality of wind turbines 14, each wind turbine comprising multiple wind blades 16. The wind turbines 14 at the wind farm 12 are operable to collectively supply electrical power to a utility grid 18. The wind farm 12 may be advantageously located in regions having relatively strong winds, such as offshore locations and flat plains, for instance.

The wind blades 16 are constructed in multiple pieces at various manufacturing locations. These include a primary component manufacturing facility 22 and one or more secondary component manufacturing facilities 24. An exemplary primary manufacturing facility 22 includes a production site for producing the primary components of the wind blades 16, while the secondary manufacturing facilities 24 include local production sites (i.e. relatively closer to the wind farm 12) for manufacturing secondary components of the wind blades. Primary and secondary components of the wind blades assemblies are discussed further below. Components manufactured in facilities 22 and 24 are shipped to the wind farm location 12 via transportation pathways 26 and 28 respectively. The transportation pathways 26 and 28 may include roadways, railways, or waterways among others. In particular, transportation pathway 26 may also include bridges and tunnels. In one embodiment, primary and secondary components may be released to a freight transportation company to be shipped to the wind farm location 12. Components shipped from the manufacturing facilities 22 and 24 are then assembled near the wind farm location 12 and mounted on the wind turbines 14, as discussed below. In one embodiment, assembly of the wind blade components at the wind farm location is performed by the secondary manufacturer producing the secondary structural components.

In one embodiment, the primary manufacturing facility 22 is a centralized production site that manufactures wind blade primary scomponents for a plurality of wind farms in various geographic locations. The primary manufacturing facility 22 may include automated manufacturing, in-house inspection, and testing facilities, including, for example, both destructive testing facilities and non-destructive testing facilities, such as ultra-sound testing facilities. Manufacturing smaller structural components in a centralized production site facilitates easier transportation of these primary structural components to the geographically spaced apart wind farms, while ensuring structural quality and integrity of these components. In certain embodiments, the primary and/or secondary manufacturing facilities may include contracting manufacturers, in which case the wind blade turbine manufacturer is not required to deal with the expense of such manufacturing facilities once the wind farm has been built.

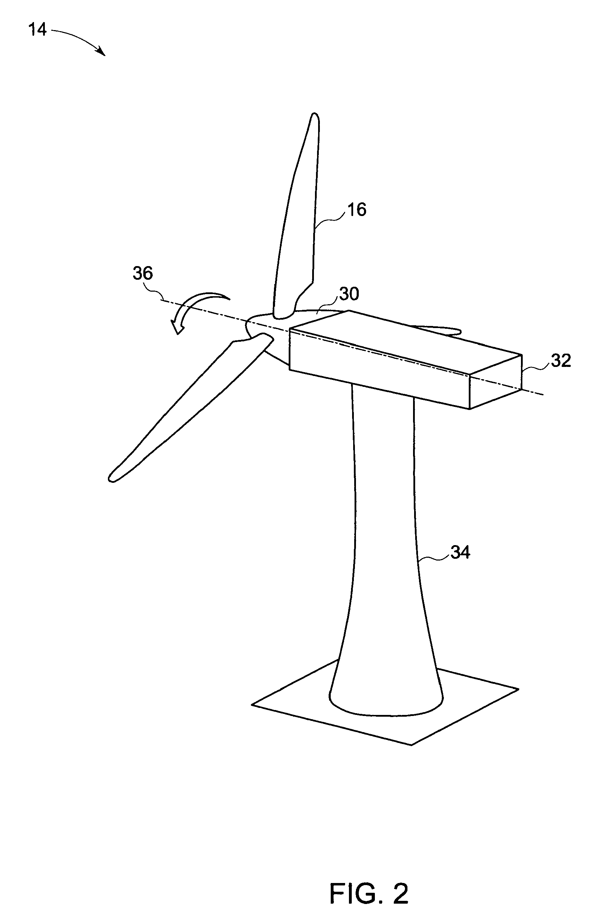

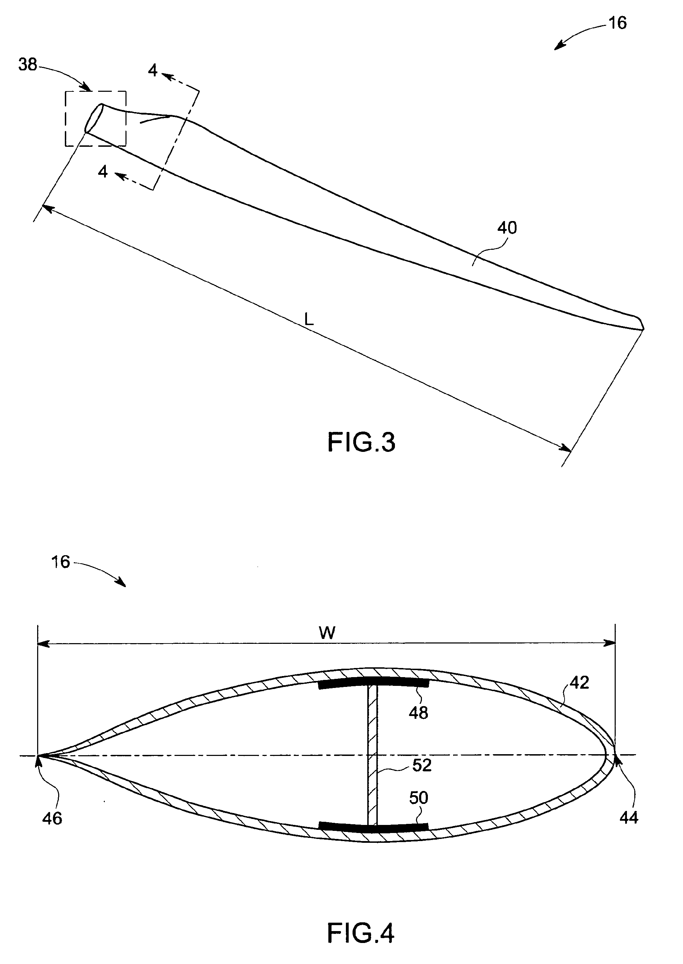

FIG. 2 illustrates a wind turbine 14, wherein aspects of the present technique can be incorporated. The wind turbine 14 comprises a rotor 30 having multiple blades 16 extending therefrom. The wind turbine 14 also comprises a nacelle 32 that is mounted atop a tower 34. The rotor 30 is drivingly coupled to an electrical generator (not shown) housed within the nacelle 32. The tower 34 exposes the blades 16 to the wind, and the blades 16 capture wind energy and transform the same into a rotational motion of the rotor 30 about an axis 36. This rotational motion is further converted into electrical energy by the electrical generator. As discussed earlier, the efficiency of wind energy capture by the blades 16 is proportional, among other factors, to the length L of the blade 16 (see FIG. 3). In order to establish structural rigidity for blades having large lengths, it is desirable to provide a higher width of the max chord W of the blade (see FIG. 4).

FIGS. 3 and 4 and illustrate various components of a wind turbine blade 16 manufactured by the present technique. FIG. 3 is a perspective view of the blade 16 illustrating a root portion 38 and a body 40 of the blade 16. The root portion 38 is a cylindrical section having a generally circular cross-section, and is a primary bending load bearing structure of the blade 16. In one embodiment, the root portion is generally manufactured at the primary manufacturing facility 22 by an automated process, such as, for example by filament winding, tape winding, braiding, infusion, or automated fiber/tow/tape placement. The body 40 has an airfoil cross-section as best illustrated in FIG. 4. The blade 16 manufactured in accordance with the present technique may have a length L and width W such that length and width of the blade and that of the transport carrier exceeds the allowed transportation limits set by the local authorities. This allows maximum wind energy capture and hence power efficiency of the wind turbine 14. Of course, as will be appreciated by one skilled in the art, transportation limits vary with geographical locations and are governed by regulations of the particular jurisdiction.

FIG. 4 is a cross-sectional view of the blade 16 along the section 4-4 in FIG. 3. The blade 16 includes an outer skin 42 formed in the shape of an airfoil section having a leading edge 44 and a trailing edge 46. The distance W between the leading edge 44 and the trailing edge 46 is referred to as the chord width of the blade 16. The chord width varies along the length of the blade 16. However, it is believed that the maximum length of the blade 16 is at least partially defined by the maximum chord width W of the blade 16. The skin 42 may be formed of lightweight core material, such as foam and balsa wood. In one embodiment, the skin 42 is manufactured in the secondary manufacturing facility 24 via low cost vacuum assisted resin transfer molding (VARTM) techniques. The blade 16 also includes longitudinal bending load bearing structures 48 and 50, also known in the pertinent art as "spar caps". In one embodiment, the spar caps 48 and 50 are formed from continuous fiber reinforced composites such as carbon composites. In certain other embodiments, the spar caps 48 and 50 may be formed of fiberglass or other continuous fibers. Spar caps may be manufactured, for example, by an automated fiber replacement method. One or more longitudinal crossbeams 52, also referred to as shear webs, are disposed within the airfoil section between the spar caps 48 and 50. The crossbeam 52 is adapted to withstand aerodynamic shear loading on the wind turbine blade 16. In the exemplary embodiment, primary components refer to primary structural or aerodynamic load bearing members of the wind turbine blade, such as the root portion and the spar caps. The skin, shear web and bonding caps (not shown) exemplify secondary structural components of the blade. Secondary components may also bear aerodynamic loads. However, such loads are significantly smaller than those borne by the primary components

In accordance with embodiments of the present technique, smaller primary components of a wind blade, such as the root and spar caps, are fabricated at the primary manufacturing facility 22. In one embodiment, the primary manufacturing facility 22 includes automated fabrication capability as well as non-destructive inspection capability. This facilitates quality and reliability in the primary parts and eliminates low cost testing processes at on site manufacturing facilities, which may compromise the quality of the composite blade structure. Moreover the primary manufacturing facilities may include testing apparatus, facilitating quality testing of primary structural components for various wind farms at a central location. These smaller structural components can be more efficiently packed on trucks or railcars and shipped to an assembly site close to the wind farm 12. Indeed, the structural integrity and quality of these primary components is of concern, as they are load bearing support structure. At the assembly site close to the wind farm 12, lower cost processes can be used to form the large secondary structures. These include vacuum assisted infusion or wet lamination processes on the skin 42 and shear webs to form the airfoil.. The shear web 52 may then disposed between the spar caps 48 and 50 and bonded to the skin and spar caps. Shipping the smaller components enables more efficient transportation, especially via bridges and through tunnels and under bridges, which had traditionally restricted the maximum permissible dimensions (W and L) of the wind turbine blades. The present technique obviates the above problem by forming the largest component of the blade 16, i.e. the skin 42 near the wind farms, vitiating the restrictions on max chord to enable optimized airfoil design. Using the presently described on site assembly technique, it may be possible to achieve unlimited blade length and max chord width. For example, the max chord width may vary from about 3.6 meters for a blade of length 50 meters to about 8 meters for a blade of length 100 meters, utilized, for example, in offshore applications.

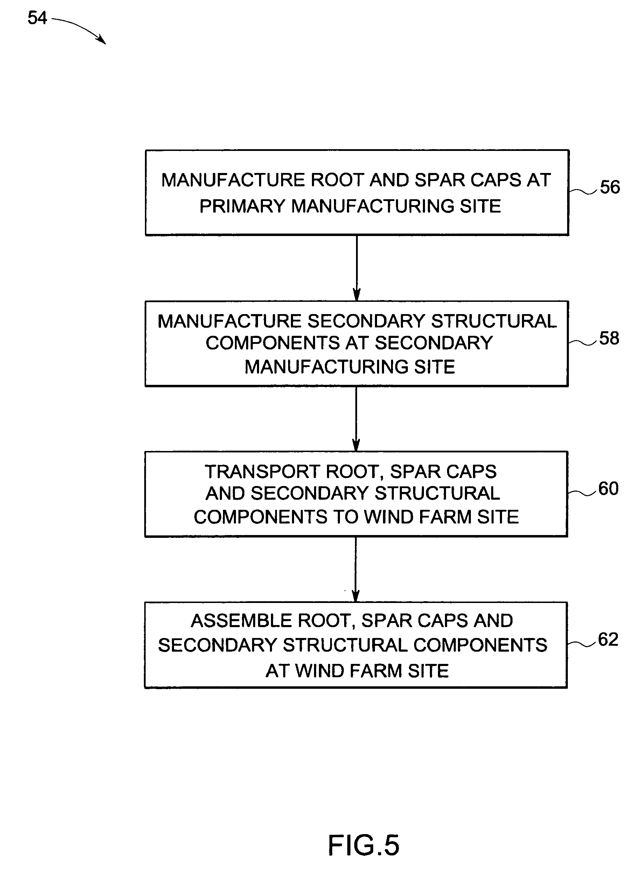

Keeping FIGS. 1-4 in mind, FIG. 5 is a flow chart illustrating an exemplary method 54 for manufacturing a wind turbine blade according to one embodiment of the present technique. The method 54 includes manufacturing the primary components of the blade, such as the root and the spar caps, for example, at a primary manufacturing site (block 56). As discussed above, this site may incorporate automated manufacturing systems and in house inspection techniques. At block 58, the secondary components are manufactured at one or more regional low cost manufacturing sites. Secondary components may include, for instance, the skin and the shear web. As these components are less critical structures , structural integrity is a lesser concern in comparison to the primary components of the blade. The primary and secondary components are then shipped at block 60 to an assembly site near the wind farm, for instance, by a freight carrier. As discussed, the present technique allows smaller structural components to be transported from these quality-manufacturing sites to the wind farm location via roadways, waterways or rail. The quality manufacturing site may accordingly have access to a waterway or a rail depot. Finally, at step 62, the primary and secondary components are assembled near the wind farm location to form the complete blade. By manufacturing the larger secondary components, such as the skin, at a facility more proximate to the wind farm, size constraints of the blade due to infrastructure limitations can be mitigated. For example, it is much easier to transport a 50-meter long blade span via a waterway or over a short distances, than it is to transport the same blade from the centralized and more distant primary facility via roadways.

As can be appreciated, the above-described techniques provide higher performance and more consistent quality in the primary structural blade components for improved reliability and lower weight designs. The techniques thus obviate restrictions on optimal airfoil design for most aerodynamic design.

## Claims

1. A method for manufacturing a wind turbine blade (16) for installation at a wind farm location (10), comprising:
manufacturing at least one structural component of the wind turbine blade (16) at a first manufacturing facility (22); and
manufacturing a skin component (42) of the wind turbine blade (16) at a second manufacturing facility (24), wherein the second manufacturing facility (24) is closer to the wind farm location (10) than the first manufacturing facility (22).

2. The method of claim 1, further comprising providing the structural and skin components (42)to an assembly location proximate to the wind farm location (10).

3. The method of claim 2, wherein providing the structural and skin components (42) comprises transporting the at least one structural component from the first manufacturing facility (22) to the assembly location.

4. The method of claim 1, further comprising assembling the structural and skin components(42) at the wind farm location (10).

5. The method of claim 2, wherein providing the structural and skin components (42) comprises releasing the structural and skin component (42)s to a freight transportation company for delivery.

6. The method of claim 1 wherein the at least one structural component comprises a spar cap (48, 50).

7. The method of claim 1 wherein the at least one structural component comprises a root portion (38) of the wind turbine blade (16).

8. The method of claim 1, further comprising manufacturing a shear web (52) of the wind turbine blade (16) at the secondary manufacturing facility.

9. The method of claim 6, comprising forming the spar caps (48, 50) via automated fiber replacement process.

10. The method of claim 7, comprising forming the root portion (38) via an automated process, comprising tape winding, or fiber placement, or tape placement, or tow placement, or braiding, or infusion, or filament winding, or combinations thereof.
